# EUROPÄISCHE PATENTANMELDUNG

(11) **EP 1 783 473 A2**
(43) Veröffentlichungstag der Anmeldung: **09.05.2007**
(21) Anmeldenummer: 06022802.0
(22) Anmeldetag: 02.11.2006
(51) Int. Cl.: G01L 5/10

(54) **Anordnung zum Erfassen und zur Kontrolle der Zugspannung eines Bandes, einer Schnur, eines Seiles od. dgl., insbesondere eines Zurrgurtes**

(30) Priorität: 03.11.2005 AT 17942005
(71) Anmelder: Kramser, Siegfried Anton, 6863 Egg (AT)
(72) Erfinder: Kramser, Siegfried Anton, 6863 Egg (AT)
(74) Vertreter: Hagspiel, Hubert

(57) **Zusammenfassung**

Bei einer Anordnung zum Erfassen und zur Kontrolle der Zugspannung eines Bandes (1), insbesondere eines Zurrgurtes, ist eine Messanordnung (2) vorgesehen, durch welche das Band (1) vom geradlinigen Verlauf abweichend hindurchgeführt ist. Eine eventuell gegenüber einem Einstellvorgang abweichende Zugspannung des Bandes (1) löst einen Schaltvorgang aus. Eine getrennt von der Messanordnung (2) ausgebildetes und angeordnetes Anzeigegerät (3) ist über Leitungen oder eine Funkverbindung mit diesem verbunden zur Anzeige und Auslösung von optischen, akkustischen und/oder mechanischen Alarmmeldungen.

## Beschreibung

Die Erfindung betrifft eine Anordnung zum Erfassen und zur Kontrolle der Zugspannung eines Bandes, einer Schnur, eines Seiles od.dgl., insbesondere eines Zurrgurtes, wobei in einer Messanordnung das Band, die Schnur, das Seil od.dgl. vom geradlinigen Verlauf abweichend hindurchgeführt ist.

Es ist bereits eine Vorrichtung zum Erfassen der Bandzugspannung eines Gurtbandes, insbesondere eines Zurrgurtes, bekannt geworden (EP0902266B1), wobei nach dem Spannen des Zurrgurtes zwischen zwei mit Abstand zueinander angeordneten Bolzen ein federbelasteter Bügel an der gegenüberliegenden Seite des Zurrgurtes anpressbar ist. An dieser Messanordnung kann dann auch die vorhandene Zugspannung des Zurrgurtes auf einer Skala abgelesen werden.

Es sind auch noch weitere Vorrichtungen zur Messung der Zugspannung von Zurrmitteln bekannt geworden (z.B. DE3138655A1, DE4036049A1, DE4100245A1, DE3000549A1). Bei all diesen Vorrichtung sind Messanordnungen mit einer Skala vorgesehen, um unmittelbar vor Ort die Zugspannung des Zurrmittels einstellen oder ablesen zu können.

Bei allen diesen bekannten Ausführungen ist es jedoch nur möglich, bei unmittelbarer Betrachtung im Bereich des Bandes, der Schnur, des Seiles od.dgl. eine Erhöhung oder Verminderung der Zugspannung festzustellen. Beispielsweise müssten dann Containerladungen oder Ladungen auf LKWs, welche mit Zurrgurten gesichert sind, alle paar Kilometer einer Kontrolle unterzogen werden. Dies ist aber aus Zeit- und Kostengründen nicht möglich.

Die vorliegende Erfindung hat sich daher zur Aufgabe gestellt, eine Anordnung der eingangs genannten Art zu schaffen, welche die Zugspannung eines Bandes, einer Schnur, eines Seiles od.dgl. einer ständigen Kontrolle unterziehen kann, wobei von diesen Werten abweichende Zugspannungen wahrgenommen und an einer beliebigen Stelle durch eine Alarmmeldung informiert werden kann.

Erfindungsgemäß gelingt dies dadurch, dass eine eventuell gegenüber einem Einstellvorgang abweichende Zugspannung des Bandes, der Schnur, des Seiles od.dgl. einen Schaltvorgang auslöst und dass eines oder mehrere getrennt von der Messanordnung ausgebildete(s) und angeordnete(s) Anzeigegerät(e) über Leitungen oder eine Funkverbindung mit diesem verbunden ist zur Anzeige und Auslösung von optischen, akkustischen und/oder mechanischen Alarmmeldungen.

Durch diese erfindungsgemäßen Maßnahmen ist praktische ständig eine ordnungsgemäße Kontrolle der Zugspannungen eines eine Last zusammenhaltenden Bandes, einer Schnur, eines Seiles od.dgl. möglich geworden, da eine Alarmmeldung dorthin erfolgt, wo eine Aufsichtsperson oder beispielsweise der Fahrer eines LKWs sitzt. Es ist gerade bei Zurrgurten für die Sicherung von Lasten auf Paletten oder auf LKWs eine genaue Kontrolle von Bedeutung, da auch nur beim Lösen eines einzigen Zurrgurtes die weiteren eingesetzten Zurrgurte wesentlich höhere Kräfte übernehmen müssen. Schon dann, wenn die Zugspannung eines einzigen Zurrgurtes nachlässt oder gänzlich auslässt, ist die ganze Ladung in Gefahr, so dass Unfälle vorprogrammiert sind.

Die Erfindung braucht nicht eine exakte Messanordnung zum Ablesen der Zugspannung, sondern es geht darum, eine Abweichung von der beim Festziehen erreichten Zugspannung wahrzunehmen und dies an ein entsprechendes Anzeigegerät weiterzuleiten. Die für die Ladung verantwortliche Person hat also ständig alles im Griff und kann - wenn keine Alarmmeldung kommt - davon ausgehen, dass die Ladung nach wie vor ordnungsgemäß gesichert ist.

In diesem Zusammenhang ist es vorteilhaft, wenn die Messanordnung an Ort und Stelle bei den eingesetzten Bändern, Schnüren, Seilen od.dgl. vorgesehen ist und das (die) Anzeigerät(e) an einem Überwachungsbereich, beispielsweise in einem Kontrollraum oder in einem Führerhaus eines LKWs angeordnet ist. So kann immer an dem gewünschten Ort der Kontrolle eine Abweichung der Zugspannungen an den betroffenen Bändern, Schnüren, Seilen od.dgl. festgestellt werden.

Ferner wird vorgeschlagen, dass die Alarmmeldung am Anzeigegerät bei einer Änderung der Zugspannung des Bandes, der Schnur, des Seiles od.dgl. zeitverzögert eingestellt ist. Damit ist ein Fehlalarm ausgeschaltet, der beispielsweise bei einem Überfahren eines Schlagloches mit einem LKW ausgelöst werden könnte. Es sollen also keine Alarmmeldungen erfolgen, wenn sich nur in Sekundenbruchteilen kurze Zugspannungsschwankungen ergeben.

Eine besonders sichere Ausbildung ist dann gegeben, wenn jedem Band, jeder Schnur, jedem Seil od.dgl. eine Messanordnung zugeordnet ist. Es ist dadurch jedes einzelne Glied, welches für die sichere Halterung einer Last vorhanden ist, einer ständigen Kontrolle unterworfen.

Eine Ausführungsvariante sieht vor, dass jeder Messanordnung ein Anzeigegerät zugeordnet ist. Es kann somit auch gleich festgestellt werden, bei welchem Band, bei welcher Schnur, welchem Seil od.dgl. eine Änderung der Zugspannung stattgefunden hat. Ein solcher Aufwand ist allein schon zur Erreichung eines hohen Sicherheitspotentials von besonderer Bedeutung.

Eine einfache Ausbildung ist dann gegeben, wenn für eine optische Alarmmeldung Licht emmitierende Dioden (LEDs) am Anzeigegerät und auch als Kontrollleuchte an der Messanordnung vorgesehen sind. Es kann dadurch auch ohne besondere akkustische Signale leicht und schnell festgestellt werden, dass eine Veränderung der Zugspannung stattgefunden hat.

Als zusätzliche Sicherheitsmaßnahme kann im Rahmen der Erfindung vorgesehen werden, dass die Ausgangszugspannung und alle Änderungen der Zugspannung der Bänder, Schnüre, Seile od.dgl. über ein digitales Aufzeichnungsgerät erfassbar sind. Eine solche Maßnahme kann insbesondere bei Versicherungsfällen, welche durch Unfälle hervorgerufen werden, zur vorteilhaften Unterstützung herangezogen werden. Es kann gegebenenfalls nachgewiesen werden, dass nicht die fehlende Zugspannung z.B bei einem LKW-Zurrgurt zu einem Unfall geführt hat.

Eine konstruktiv vorteilhafte Anordnung ist dann vorhanden, wenn den einer Ladung als Sicherheitsmaßnahme zugeordneten Bändern, Schnüren, Seilen od.dgl. jeweils Messanordnungen zugeordnet sind, welche mit einem gemeinsamen Anzeigegerät zusammenwirken. Es ist damit ein für alle Messanordnungen gemeinsames Anzeigegerät vorhanden, was die Überwachung wesentlich erleichtert.

In diesem Zusammenhang liegt eine vorteilhafte Ausbildung darin, dass den Messanordnungen Anzeigegeräte zugeordnet sind, welche den einzelnen Messanordnungen zuordenbare optische, akkustische und/oder mechanische Alarmmeldungen ausführen. Es können also an den Anzeigegeräten optisch, akkustisch oder mechanisch wahrnehmbare und bezüglich der einzelnen Messanordnungen zuordenbare Signale aufgezeigt werden, welche gleich dem betreffenden Band, der Schnur, dem Seil od.dgl. zugeordnet werden kann.

Eine besondere konstruktive Gestaltung liegt darin, dass die Messanordnung wenigstens zwei, vorzugsweise jedoch drei Bolzen oder Umlenkelemente aufweist, welche bezogen auf die geradlinige Hindurchführung des Bandes, der Schnur, des Seiles od.dgl. versetzt zueinander liegend aufeinander folgen. Es kann so auf einfache Weise eine Möglichkeit geschaffen werden, das Band, die Schnur, das Seil od.dgl. vom geradlinigen Verlauf abweichend durch die Messanordnung zu führen, um so eine entsprechende, quer zur Längsrichtung des Bandes, der Schnur, des Seiles od.dgl. wirkende Kraftkomponente zu erreichen, über welche die Zugspannung und vor allem Veränderungen der Zugspannung abgeleitet werden können.

In diesem Zusammenhang ist es besonders vorteilhaft, wenn wenigstens einem der Bolzen oder Umlenkelemente ein druckempfindliches Schaltelement zugeordnet ist. Dieses Schaltelement kann auf verschiedenste Art und Weise einen Auslösevorgang bewirken, wenn eine besondere Veränderung der Zugspannung und somit der Andruckkraft des Bandes, der Schnur, des Seiles od.dgl. auftritt.

Im Rahmen der Erfindung sind verschiedenste Möglichkeiten gegeben, wobei die vorteilhaftesten Anordnungen dann gegeben sind, wenn die druckempfindlichen Schaltelemente aufgrund von sich verändernden Durchbiegungen, Dehnungen, Federkräften od.dgl. auslösbar sind. Diese Durchbiegungen, Dehnungen, Federkräfte od.dgl. können gerade durch die mehr oder weniger starke Belastung des entsprechenden Bolzens oder Umlenkelementes ausgelöst werden und sind daher in einfacher Weise auch messbar.

Eine vorteilhafte Maßnahme für die erfindungsgemäße Anordnung liegt darin, dass die druckempfindlichen Schaltelemente nach dem Zugspannungsaufbau im Band, in der Schnur, im Seil od.dgl. einstellbar sind, wobei eine Veränderung der Zugspannung einen Schaltvorgang auslöst. Es kann somit eine einfache Einstellung der Schaltelemente auf die üblichen und vor Ort gegebenen Zugspannungen im Band, in der Schnur, im Seil od.dgl. erfolgen. Mit den erfindungsgemäßen Messanordnungen soll ja nicht die exakte Zugspannung gemessen werden, sondern es ist wesentlich, dass eine Abweichung von der eingestellten Zugspannung festgestellt und eine Alarmmeldung ausgelöst werden kann.

Eine konstruktiv einfache Ausbildung sieht vor, dass der mit dem druckempfindlichen Schaltelement ausgestattete Bolzen bzw. das Umlenkelement mit einem Tragbügel fest verbunden, vorzugsweise verschweißt, verschraubt oder vernietet ist, wogegen die weiteren Bolzen bzw. Umlenkelemente in deren Achsrichtung verschiebbar in Bohrungen des Tragbügels einsetzbar und gegenüber diesem in der eingeschobenen Stellung verriegelbar sind. Es kann dadurch in einfacher Weise das Band, die Schnur, das Seil od.dgl. eingelegt werden, wobei dann nur noch die anderen beiden Bolzen in deren Achsrichtung eingeschoben werden müssen. Das Band, die Schnur, das Seil od.dgl. ist dann sicher und mit einer entsprechenden Umlenkung in die Messanordnung eingelegt, um dann nach dem Spannen des Bandes, der Schnur, des Seiles od.dgl. die entsprechenden Kräfte auf das druckempfindliche Schaltelemente ausüben zu können.

Weitere erfindungsgemäße Merkmale und besondere Vorteile werden in der nachstehenden Beschreibung anhand der Zeichnungen noch näher erläutert. Es zeigen:
Fig. 1 eine Schrägsicht der Messanordnung im Bereich der Durchführung eines Bandes, einer Schnur, eines Seiles od.dgl.;
Fig. 2 eine Schrägsicht eine Ausführungsbeispieles eine kompletten Messanordnung mit den zugehörigen Schaltelementen;
Fig. 3 einen Schnitt nach der Linie III-III in Fig. 2;

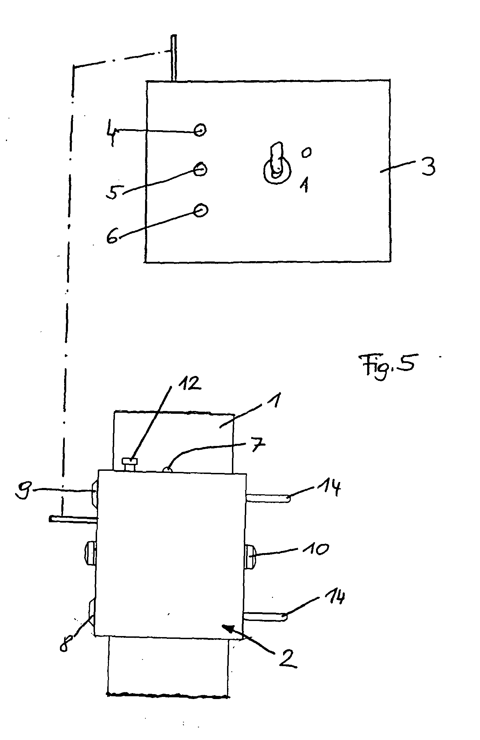

Fig. 4 eine vergrößerte Darstellung des Bereiches B in Fig.3;
Fig. 5 eine schematische Darstellung einer Messanordnung und eines Anzeigegerätes.

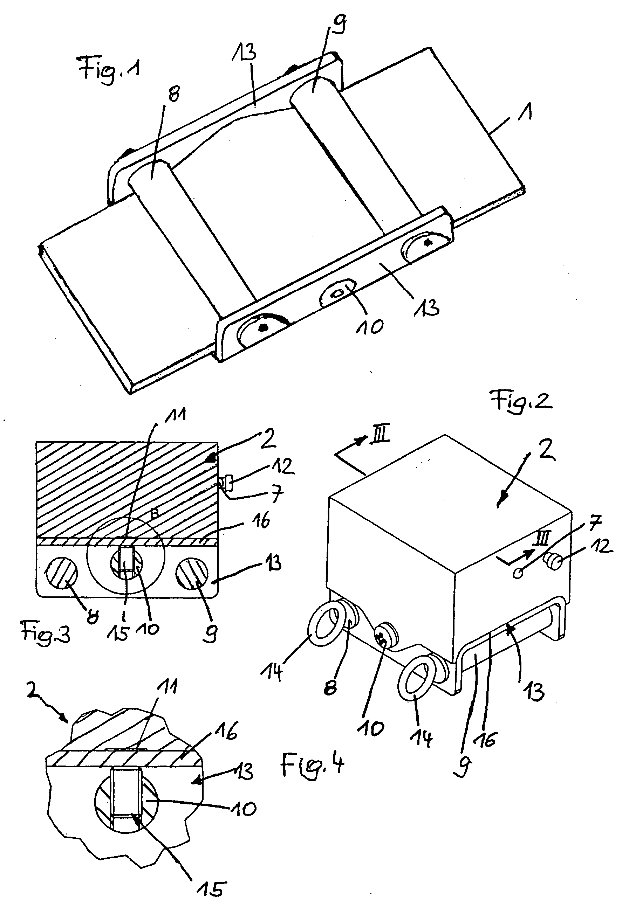

Bei einer Anordnung zum Erfassen und zur Kontrolle der Zugspannung eines Bandes 1, einer Schnur, eines Seiles od.dgl., insbesondere eine Zurrgurtes, ist eine Messanordnung 2 vorgesehen, in welcher das Band 1, die Schnur, das Seil od.dgl. vom geradlinigen Verlauf abweichend hindurchgeführt ist, wie dies auch deutlich der Schrägsicht nach Fig.1 entnommen werden kann.

In der nachstehenden Beschreibung wird nur noch auf ein Band 1 eingegangen, das beispielsweise ein Zurrgurt zur sicheren Halterung von Lasten auf einer Palette oder auch auf einem LKW eingesetzt wird. Solche Bänder werden aber auch beim Verstauen von Ladungen in Großcontainern, also beispielsweise im Schiffsfrachtverkehr, eingesetzt. Die erfindungsgemäßen Maßnahmen sind aber überall dort vorteilhaft einsetzbar, wo es auf die Aufrechterhaltung einer bestimmten Zugspannung bei Bändern, Schüren, Seilen od.dgl. ankommt.

Von besonderer Bedeutung ist es, eine eventuell gegenüber einem Einstellvorgang abweichende Zugspannung des Bandes 1 wahrzunehmen und einen Schaltvorgang auszulösen. Es sind dabei eines oder mehrere getrennt von der Messanordnung 2 ausgebildete(s) und angeordnete(s) Anzeigegerät(e) 3 über Leitungen oder eine Funkverbindung mit diesem verbunden. Das Anzeigegerät 3 ist zur Anzeige und Auslösung von optischen, akkustischen und/oder mechanischen Alarmmeldungen ausgestattet.

Die Messanordnung 2 ist jeweils an Ort und Stelle bei den eingesetzten Bändern 1 vorgesehen und das Anzeigeräte 3 an einem Überwachungsbereich, beispielsweise in einem Kontrollraum oder in einem Führerhaus eines LKWs angeordnet.

Die Messanordnung 2 besteht also im wesentlichen aus einer Anordnung im Bereich des Bandes 1 und einem Geräte zur beispielsweise Visualisierung der gelieferten Daten, wobei das Anzeigegerät 3 für einen oder beliebig viele Messanordnungen ausgestattet werden kann.
1. Die Alarmmeldung am Anzeigegerät 3 ist bei einer Änderung der Zugspannung des Bandes 1 zeitverzögert eingestellt. Beispielsweise ergibt sich dann eine entsprechende Alarmmeldung erst nach zirka drei Sekunden nach einem Abfall der Zugspannung. Analog dazu wird das Überschreiten der Zugspannung angezeigt. Kommt aus irgendwelchem Grund z.B. länger als zwanzig Sekunden kein Signal von der Messanordnung 1, kann dies als Störung durch Anzeige aller Alarmelemente angezeigt werden. Zur optischen Alarmmeldung sind vorteilhaft Licht emmitierende Dioden 4,5,6 (LEDs) am Anzeigegerät 3 und auch als Kontrollleuchte 7 an der Messanordnung 2 vorgesehen.

Vorteilhaft wird jedem Band 1 eine Messanordnung 2 zugeordnet. Es kann dabei auch jeder Messanordnung 2 ein Anzeigegerät 3 zugeordnet sein. Weiters ist es möglich, dass den einer Ladung als Sicherheitsmaßnahme zugeordneten Bändern 1 jeweils Messanordnungen 2 zugeordnet sind, welche mit einem gemeinsamen Anzeigegerät 3 zusammenwirken. Es ist ferner denkbar, den Messanordnungen 2 Anzeigegeräte 3 zuzuordnen, welche den einzelnen Messanordnungen 2 zuordenbare optische, akkustische und/oder mechanische Alarmmeldungen ausführen.

Eine weitere vorteilhafte Anordnung, welche jedoch in den Zeichnungen nicht dargestellt ist, sieht vor, dass die Ausgangszugspannung und alle Änderungen der Zugspannung der Bänder 1 über ein digitales Aufzeichnungsgerät erfassbar sind. Es kann dann ein Nachweis über die sichere Halterung einer Last vom Beginn des Spannvorganges eines Bandes bis zum gewollten Entlasten der Bänder 1 erfolgen.

Eine konstruktive Ausgestaltung der Anordnung, wie sie auch in den Zeichnungen dargestellt ist sieht vor, dass die Messanordnung 2 wenigstens zwei, vorzugsweise jedoch drei Bolzen 8, 9, 10 oder entsprechende Umlenkelemente aufweist, welche bezogen auf die geradlinige Hindurchführung des Bandes 1 versetzt zueinander liegend aufeinander folgen.

Wenigstens ein Bolzen 10 oder Umlenkelement ist mit einem druckempfindlichen Schaltelement 11 ausgestattet. Die druckempfindlichen Schaltelemente 11 sind aufgrund von sich verändernden Durchbiegungen, Dehnungen, Federkräften od.dgl. auslösbar. Bei einem bevorzugten Ausführungsvariante ist das druckempfindliche Schaltelement 11 als Dehnmessstreifen ausgeführt.

Wenn die Messanordnung 2 im Bereich eines Bandes ordnungsgemäß montiert ist, wird das Band gespannt, bis die gewünschte Zugspannung erreicht ist. Jetzt wird die Messanordnung durch Drücken eines Tasters 12 auf die gerade vorhandene Zugspannung und somit Anpresskraft des Bandes 1 kalibriert. Die Kontrollleuchte 7 quittiert dies beispielsweise durch ein kurzes Aufleuchten. Die druckempfindlichen Schaltelemente 11 sind also nach dem Zugspannungsaufbau im Band 1 einstellbar, wobei eine Veränderung der Zugspannung im Band 1 einen Schaltvorgang auslöst.

Der mit dem druckempfindlichen Schaltelement 11 ausgestattete Bolzen 10 bzw. das Umlenkelement ist mit einem Tragbügel 13 fest verbunden, vorzugsweise verschweißt, verschraubt oder vernietet. Die weiteren Bolzen 8,9 bzw. Umlenkelemente sind in deren Achsrichtung verschiebbar in Bohrungen des Tragbügels 13 einsetzbar und gegenüber diesem in der eingeschobenen Stellung verriegelbar. Dadurch kann in einfacher Weise das Band 1 in die Messanordnung 2 eingeführt werden. Zur Vereinfachung der Montage der Bolzen 8 und 9 können diese an einem Ende mit entsprechenden Handhabungselementen 14 versehen sein.

Die Übertragung der Werte (Schaltungen) von der Messanordnung 2 an das Anzeigegerät 3 erfolgt wahlweise über eine Leitungsverbindung oder über eine Funkstrecke mit beliebiger Frequenz. Bei einer drahtgebundenen Übertragung empfiehlt es sich, auch die zur Stromversorgung nötige Zugspannung über Kabel zur Verfügung zu stellen. Es kann dann ein ununterbrochener Betrieb über einen längeren Zeitraum gewährleistet werden. Technisch bedingt ist die Übertragung per Draht naturgemäß sehr viel störungsunempfindlicher. Bei einer Übertragung mit einer Funkstrecke erfolgt für die Messanordnung 2 und gegebenenfalls auch für das Anzeigegerät 3 ein Batteriebetrieb.

Durch die Montage der Messanordnung 2 wird das Band 1 über den mittleren, beispielsweise verschweißten Bolzen 10 umgelenkt. Wird nun das Band 1 gespannt, entsteht eine resultierende Kraft, welche proportional zu der Zugspannung am zu überwachenden Band 1 ist. Diese Kraft wirkt über eine hier noch eingesetzte Stellschraube 15 auf den Steg 16 des Tragbügels 13 und verformt diesen Steg 16 elastisch. Diese Deformierung des Steges 16 wird auf das als Dehnmessstreifen ausgeführte druckempfindliche Schaltelement 11 übertragen, durch eine elektronische Schaltung verstärkt und ausgewertet.

Die einfachste Art beim Anzeigegerät 3 ist die Visualisierung mit entsprechenden LEDs 4, 5, 6, welche vorteilhaft verschiedene Farben haben. Rot bedeutet z.B., dass die kalibrierte Zugspannung unterschritten ist und dass etwas unternommen werden muss. Grün bedeutet z.B., dass die Zugspannung innerhalb der Toleranzgrenzen liegt. Die Farbe orange kann z.B. anzeigen, dass die kalibrierte Zugspannung überschritten worden ist. Akkustische Alarmmeldungen können beispielsweise verschiedene Pfeif- oder Brummtöne sein. Bei mechanischen Alarmmeldungen ist es denkbar, dass irgendwelche Teile sich bewegen oder beispielsweise vibrieren oder dass Alarmhebel- oder klappen sich bewegen. Grundsätzlich sind hier eine Reihe von Möglichkeiten gegeben. Wesentlich und wichtig ist dabei nur, dass ein entsprechendes Anzeigegerät 3 an einem zentralen, von einer Bedienungsperson einschaubaren Bereich angeordnet ist, damit auch gleich reagiert werden kann, wenn Probleme anstehen.

Gerade bei einer Nachrüstung beispielsweise von LKWs und Anhängern scheint es sinnvoll, eine Messdatenübertragung mittels Funkstrecke zu bewerkstelligen, da hier problemlos Strecken von beispielsweise dreißig Metern überbrückt werden können. Für Frachtbetriebe ergeben sich bei Einsatz der erfindungsgemäßen Anordnung beachtliche Vorteile. So kann der bisher erforderliche Zeitaufwand für die ständige Kontrolle der Zugspannung der Zurrgurte wesentlich verringert werden. Das Unfall- und Gefahrenrisiko kann in besonderem Maße verringert werden.

Um ein leichtes Auswechseln der Messanordnungen 2 zu ermöglichen, können beispielsweise am Chassis eines LKWs oder eines Anhängers Steckdosen oder irgendwelche Stecker oder Kupplungselemente angeordnete werden, an welchen dann eine einfache Montage erfolgen kann.

## Patentansprüche

1. Anordnung zum Erfassen und zur Kontrolle der Zugspannung eines Bandes, einer Schnur, eines Seiles od.dgl., insbesondere eines Zurrgurtes, wobei in einer Messanordnung das Band, die Schnur, das Seil od.dgl. vom geradlinigen Verlauf abweichend hindurchgeführt ist, **dadurch gekennzeichnet, dass** eine eventuell gegenüber einem Einstellvorgang abweichende Zugspannung des Bandes (1), der Schnur, des Seiles od.dgl. einen Schaltvorgang auslöst und dass eines oder mehrere getrennt von der Messanordnung (2) ausgebildete(s) und angeordnete(s) Anzeigegerät(e) (3) über Leitungen oder eine Funkverbindung mit diesem verbunden ist zur Anzeige und Auslösung von optischen, akkustischen und/oder mechanischen Alarmmeldungen.

2. Anordnung nach Anspruch 1, **dadurch gekennzeichnet, dass** die Messanordnung (2) an Ort und Stelle bei den eingesetzten Bändern (1), Schnüren, Seilen od.dgl. vorgesehen ist und das (die) Anzeigerät(e) (3) an einem Überwachungsbereich, beispielsweise in einem Kontrollraum oder in einem Führerhaus eines LKWs angeordnet ist.

3. Anordnung nach den Ansprüchen 1 und 2, **dadurch gekennzeichnet, dass** die Alarmmeldung am Anzeigegerät (3) bei einer Änderung der Zugspannung des Bandes (1), der Schnur, des Seiles od.dgl. zeitverzögert eingestellt ist.

4. Anordnung nach den Ansprüchen 1 und 2, **dadurch gekennzeichnet, dass** jedem Band (1), jeder Schnur, jedem Seil od.dgl. eine Messanordnung (2) zugeordnet ist.

5. Anordnung nach Anspruch 3, **dadurch gekennzeichnet, dass** jeder Messanordnung (2) ein Anzeigegerät (3) zugeordnet ist.

6. Anordnung nach den Ansprüchen 1 bis 5, **dadurch gekennzeichnet, dass** für eine optische Alarmmeldung Licht emmitierende Dioden (LEDs) (4,5,6) am Anzeigegerät (3) und auch als Kontrollleuchte (7) an der Messanordnung (2) vorgesehen sind.

7. Anordnung nach Anspruch 1 und einem der vorstehenden Ansprüche, **dadurch gekennzeichnet, dass** die Ausgangszugspannung und alle Änderungen der Zugspannung der Bänder (1), Schnüre, Seile od.dgl. über ein digitales Aufzeichnungsgerät erfassbar sind.

8. Anordnung nach Anspruch 4, **dadurch gekennzeichnet, dass** den einer Ladung als Sicherheitsmaßnahme zugeordneten Bändern (1), Schnüren, Seilen od.dgl. jeweils Messanordnungen (2) zugeordnet sind, welche mit einem gemeinsamen Anzeigegerät (3) zusammenwirken.

9. Anordnung nach Anspruch 1 oder einem der Ansprüche 1 bis 8, **dadurch gekennzeichnet, dass** den Messanordnungen (2) Anzeigegeräte (3) zugeordnet sind, welche den einzelnen Messanordnungen (2) zuordenbare optische, akkustische und/oder mechanische Alarmmeldungen ausführen.

10. Anordnung nach Anspruch 1, **dadurch gekennzeichnet, dass** die Messanordnung (2) wenigstens zwei, vorzugsweise jedoch drei Bolzen (8,9,10) oder Umlenkelemente aufweist, welche bezogen auf die geradlinige Hindurchführung des Bandes (1), der Schnur, des Seiles od.dgl. versetzt zueinander liegend aufeinander folgen.

11. Anordnung nach den Ansprüchen 1 und 2, **dadurch gekennzeichnet, dass** wenigstens einem der Bolzen (10) oder Umlenkelemente ein druckempfindliches Schaltelement (11) zugeordnet ist.

12. Anordnung nach den Ansprüchen 10 und 11, **dadurch gekennzeichnet, dass** die druckempfindlichen Schaltelemente (11) aufgrund von sich verändernden Durchbiegungen, Dehnungen, Federkräften od.dgl. auslösbar sind.

13. Anordnung nach Anspruch 12, **dadurch gekennzeichnet, dass** die druckempfindlichen Schaltelemente (11) nach dem Zugspannungsaufbau im Band (1), in der Schnur, im Seil od.dgl. einstellbar sind, wobei eine Veränderung der Zugspannung einen Schaltvorgang auslöst.

14. Anordnung nach einem der Ansprüche 7 bis 13, **dadurch gekennzeichnet, dass** der mit dem druckempfindlichen Schaltelement (11) ausgestattete Bolzen (10) bzw. das Umlenkelement mit einem Tragbügel (13) fest verbunden, vorzugsweise verschweißt, verschraubt oder vernietet ist, wogegen die weiteren Bolzen (8,9) bzw. Umlenkelemente in deren Achsrichtung verschiebbar in Bohrungen des Tragbügels (13) einsetzbar und gegenüber diesem in der eingeschobenen Stellung verriegelbar sind.
